# EUROPEAN PATENT APPLICATION

(11) **EP 1 935 240 A2**
(43) Date of publication of application: **25.06.2008**
(21) Application number: 08154451.2
(22) Date of filing: 25.04.2006
(51) Int. Cl.: A01K 5/00

(54) **Apparatus and method for separating and mixing feed for live-stock**

(30) Priority: 19.05.2005 NL 1029075
(62) Divisional of application: 06113032.4
(71) Applicant: Trioliet Mullos B.V., 7575 BE Oldenzaal (NL)
(72) Inventor: Van der Plas, Nicolaas, 7576 WX, Oldenzaal (NL); Liet, Cornelis Hendricus, 7581 Pj, Losser (NL)
(74) Representative: Zonneveld, Hendrik Jan

(57) **Abstract**

An apparatus for separating and mixing feed for livestock comprises at least one unit for processing feed, which unit comprises a conveyor alley for receiving one or more bales of feed. The conveyor alley comprises conveying means for conveying the received bale or bales of feed from an inlet side to a discharge side. The unit comprises separating means for separating feed from a bale that has been conveyed to the discharge side. The apparatus comprises a mixing bin for mixing feed components into a feed mixture and means for supplying separated feed to the mixing bin. The separating element is configured as a cutting unit arranged for separating a slice of feed from the end facing towards the discharge side of the bale that is present at the discharge side. The cutting unit can separate feed according to a cutting path such that the end side facing towards the discharge side of the remaining part of the bale is rearwardly inclined with respect to the vertical.

## Description

The invention relates to an apparatus for separating and mixing feed for livestock, comprising at least one unit for processing feed, which unit comprises a conveyor alley for receiving one or more bales of feed, which conveyor alley comprises conveying means for conveying the received bale(s) of feed from an inlet side to a discharge side, and separating means for separating feed from a bale that has been conveyed to the discharge side, said apparatus furthermore comprising a mixing bin for mixing feed components into a feed mixture and means for supplying separated feed to the mixing bin, as well as to a method for separating and mixing feed for livestock.

Such an apparatus and method are described in the present Applicant's Dutch patent application No. 1026841.

The object of the invention is to provide an improved apparatus and method of this kind.

According to the invention, the apparatus is to that end characterised in that the separating element is configured as a cutting unit arranged for separating a slice of feed from the end facing towards the discharge side of the bale that is present at the discharge side.

Preferably, the cutting unit is arranged for following a cutting path such that the end side facing towards the discharge side of the remaining part of the bale is rearwardly inclined with respect to the vertical. More in particular, the cutting unit is arranged for separating a slice of feed according to a cutting path such that the remaining part of the bale is narrower at the upper side than at the bottom side.

According to the method, one or more bales of feed is (are) placed on one or more conveyor alleys, the bale(s) placed on the conveyor alley(s) are conveyed from an inlet side to a discharge side, and feed is separated from a bale that has been conveyed to the discharge side, which separated feed is mixed into a feed mixture in a mixing bin. According to the invention, this method is characterised in that a slice of feed is separated from the end facing towards the discharge side of the bale that is present at the discharge side, and that preferably in such a manner that the end side of the remaining part of the bale facing towards the discharge side is rearwardly inclined with respect to the vertical.

In this way an apparatus and a method are obtained in which a correct metering of the feed being supplied to the mixing bin can be realised in that the separating of the slice of feed by the cutting unit can take place gradually and can be stopped at any desired moment. In the preferred variant, in which cutting takes place according to the aforesaid cutting path, a very precise metering is ensured in that the remaining part of the bale from which the slice has been separated remains stable and no undesirable chunks of feed will fall from the conveyor alley and be supplied to the mixing bin.

The invention will now be explained in more detail with reference to the drawing, in which a few embodiments of the apparatus according to the invention are schematically shown.

Fig. 1 is a schematic plan view of a first embodiment of the apparatus according to the invention.

Fig. 2 is a schematic plan view of a second embodiment of the apparatus according to the invention.

Fig. 3 is a partial cross-sectional view of a conveyor alley of the apparatus according to the invention.

Fig. 4 is a schematic side view of the discharge side of the conveyor alleys of the apparatus according to Fig. 1.

Fig. 5 is a larger-scale view of a part of the side view of Fig. 4.

Fig. 6 is a schematic plan view of the discharge side of the apparatus of Fig. 1.

Fig. 7 is a side view corresponding to Fig. 4 of the discharge side of a third embodiment of the apparatus according to the invention.

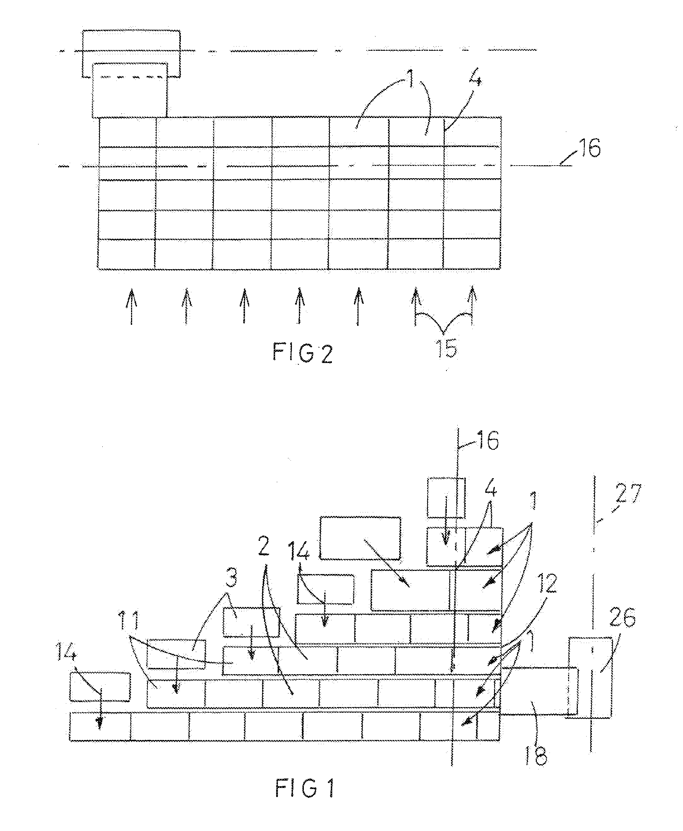

In Fig. 1 a schematic plan view is shown of an apparatus for separating and mixing feed for livestock, which apparatus comprises six units 1 arranged in side-by-side relationship for processing feed. A larger or a smaller number of units, even a single unit, may be used in other embodiments. Each unit 1 comprises a conveyor alley or conveyor passageway 2 for receiving one or more bales of feed 3, possibly with loose fodder between said bales. The feed placed on the various conveyor alleys 2 may consist of bales of maize and grass of different qualities, bales of stray and bales of alfalfa, for example.

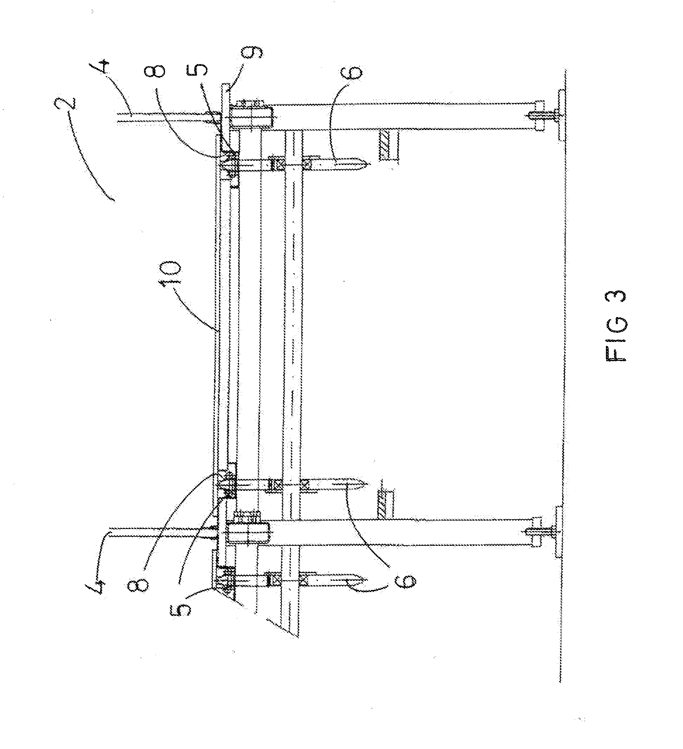

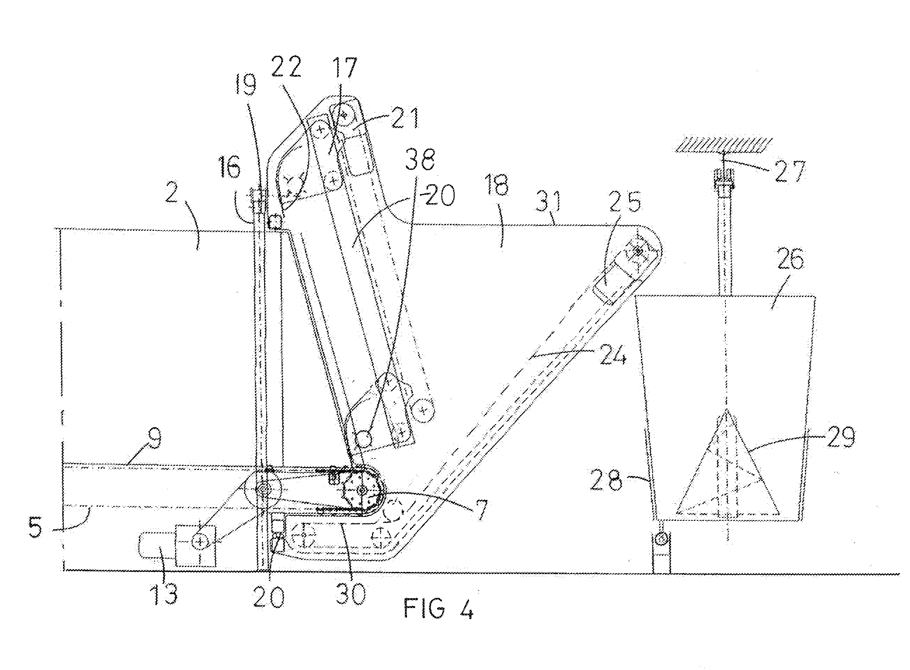

Fig. 3 is a partial cross-sectional view of a conveyor alley 2, which clearly shows that the conveyor alleys 2 are bounded by sideboards 4 on either side. Fig. 3 furthermore shows that each conveyor alley 2 comprises conveying means, in the form of endless conveyor chains 5 in the illustrated embodiment, which extend between return sprockets 6 and 7 as shown in Figs. 3 and 4. It will be apparent that conveying means other than conveyor chains may be used, for example a block slide, hydraulic conveying means and the like.

The upper part of the conveyor chains 5 is guided in troughs 8, which extend in the longitudinal direction of a bottom 9 of the associated conveyor alley 2. Carriers 10 extending transversely to the conveying direction are provided on the conveyor chains 5. The carriers 10 are supported on the bottom 9 and are capable of moving the bales that have been placed on the conveyor alley 2 at an inlet side 11 towards a discharge side 12 when the conveyor chains 5 are driven. The drive unit for the conveyor chains 5 is schematically indicated at 13 in Fig. 4.

In this way the upper part of the conveyor chains 5 lies protected in the trough 8 of the bottom 9, so that the chains 5 cannot be damaged by the teeth of the fork that places the bales 3 on the conveyor alleys 2 at the inlet side 11.

In Fig. 1 the direction in which the bales 3 are fed to the conveyor alleys 2 is indicated by arrows 14. As the figure shows, said feeding direction extends transversely to the conveying direction of the bales on the conveyor alleys 2. The sideboards 4 are strengthened at the inlet side 11, functioning as bumper boards, so that the bales can be pushed against said bumper boards by means of a tractor so as to ensure that the bales are correctly placed on the bottom 9, with their longitudinal axis extending in the conveying direction of the conveyor. This prevents the bales 3 getting wedged between the sideboards 4.

Although the bales are placed on the bottom 9 with their longitudinal axis in line with the conveying direction of the conveyor alleys 2 in Fig. 1, it is also possible, if desired, to place the bales 3 on the bottom 9 with their longitudinal axis extending transversely to the conveying direction of the conveyor alleys 2.

In Fig. 2 such an embodiment is shown in schematic plan view, in which the feeding direction likewise extends in line with the conveying direction of the conveyor chains 5, as indicated by an arrow 15.

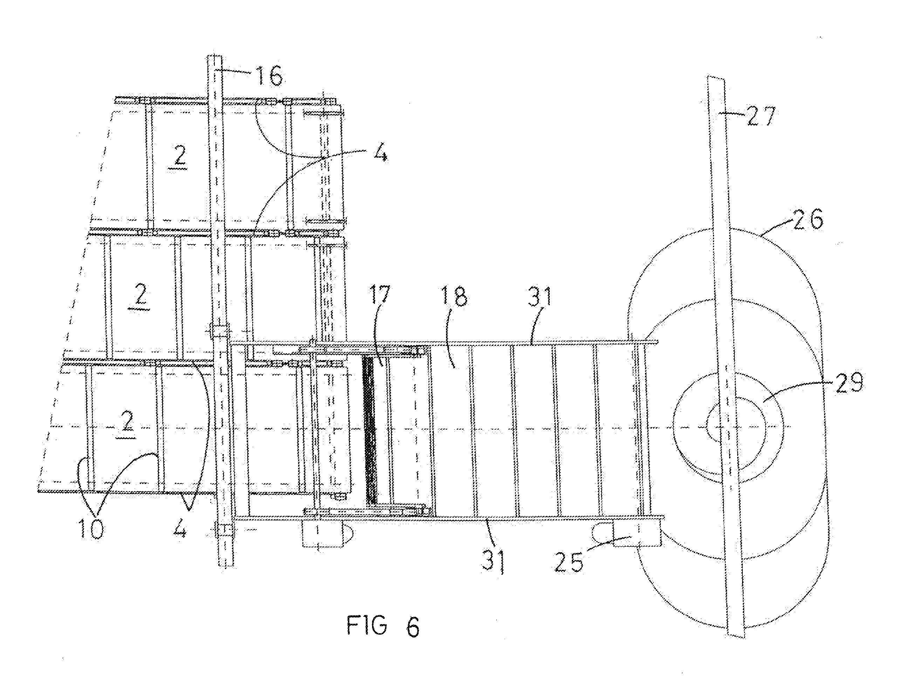

Fig. 4 is a schematic side view of the discharge side of the conveyor alleys of the apparatus according to Fig. 1, showing a frame 16 disposed at the discharge side 12 of the conveyor alley 2. Said frame 16 extends over the discharge sides 12 of all the side-by-side conveyor alleys 2 and carries a cutting unit 17, which forms part of a discharge unit 18 in this embodiment. The discharge unit 18 is guided on a transverse guide 19 at the upper side of the frame 16 and a transverse guide 20 at the bottom side of the frame 16. In this way the cutting unit 17 is movable transversely to the conveyor alleys 2, with a drive unit (not shown) moving the cutting unit 17 to operating positions in which the cutting unit 17 and the discharge unit 18 are in line with a conveyor alley 2, as is shown in plan view in Fig. 6.

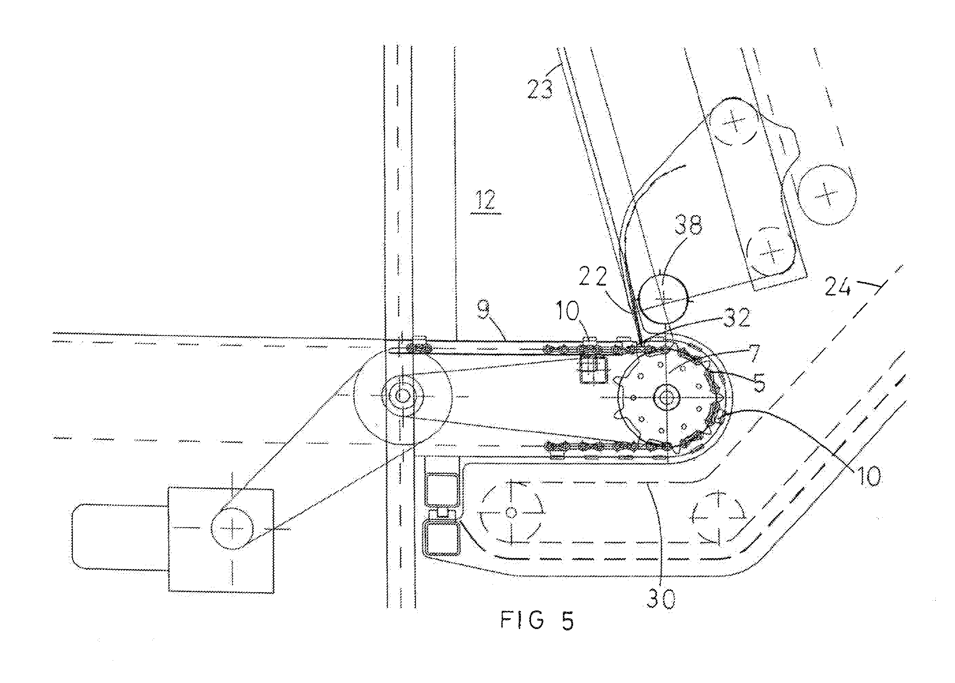

The cutting unit 17 comprises a frame 20, along which the cutting unit 17 can be moved up and down by a drive unit 21 (schematically indicated). The frame 20 is disposed at an angle with respect to the vertical, so that the cutting unit 17 will follow an inclined cutting path upon moving downwards, with a cutting knife 22, which is shown in more detail in Fig. 5, forming an inclined cut surface 23. It is noted that the cutting path does not have to be a straight line, but that it may also follow a curved line, so that the cut surface will not be flat but curved. According to an advantageous embodiment, a cutting knife comprising two reciprocable blades may be used. Furthermore, the cutting unit 17 may also be provided with cutting means other than the cutting knife 22. The term cutting unit as used in the description and the claims is to be understood to mean any unit by means of which a slice of feed can be separated from the end of the bale that faces towards the discharge side.

The cutting unit 17 cuts a slice of feed from the end facing towards the discharge side of the bale 3 that is present at the discharge side, forming the inclined cut surface, which may or may not be curved, so that the end side of the remaining part of the bale 3 is rearwardly inclined with respect to the vertical. Moreover, said remaining part of the bale 3 is shorter at the upper side than at the bottom side in this case. This achieves that no chunks of feed will come off the remaining part of the bale and fall into the discharge unit 18, and that the remaining part of the bale 3 will remain in a stable position on the bottom 9 of the conveyor alley 2, also if the mayor part has already been cut from the bale. This means that the cutting unit 17 can precisely cut a desired amount of feed from the bale 3 present at the discharge side 12, which amount can be measured by weighing means (not shown). Once the desired amount of feed has been cut from the bale 3, the cutting process is stopped.

The thickness of the slice of feed that is cut from the bale 3 by the cutting unit 17 can be selected by varying the distance over which the bale is moved to the discharge side by the conveyor chains 5. According to one embodiment I (not shown) of the apparatus described herein, the thickness of the slice to be separated can also be determined in that the cutting unit 17 is movable in the longitudinal direction of the conveyor alleys 2.

In the embodiment that is shown in Figs. 1-6, the discharge unit 18 comprises a discharge conveyor belt 24 that can be driven by a drive unit 25 (schematically indicated). The discharge conveyor belt 24 discharges the feed that has been cut from the bale 3 to a mixing bin 26, which is suspended from a rail 27 in this embodiment. The mixing bin 26 is provided with flaps 28 (schematically indicated) on either side, via which the feed mixture from the mixing bin 26 can be delivered to the livestock. Disposed inside the mixing bin 26 is a mixing element 29, for example in the form of a vertical mixing screw. It is also possible to fit the mixing bin with more than one vertical mixing screw. Furthermore, several guide elements that help to achieve a correct homogeneous mixture of the feed may be provided in the mixing bin 26 as part of the mixing elements 29. The mixing element 29 ensures that a correct homogeneous composition of the feed mixture is obtained, which mixture may consist of portions from various bales 3 from the various conveyor alleys 2 and any other feed components. When the desired amount of feed from bales from the various conveyor alleys 2 is contained in the mixing bin 26, the feed can be mixed to obtain a feed mixture. The mixing bin 26 is moved to the livestock shed via the rail 27. In the shed, the feed mixture is delivered to the livestock in a metered manner via the flaps 28.

The mixing bin 26 is provided with a driving motor for moving the mixing bin along the rail 27, with the power supply to the driving motor possibly taking place via the rail 27 or by means of a battery. Furthermore it is possible for the mixing bin 26 to move the discharge unit 18 to the conveyor alleys 2 from which feed is to be received. The mixing bin 26 may to that end be coupled to the discharge unit 18 at the location of the conveyor alleys 2.

As already noted above, the amount of feed can be determined by weighing means (not shown). Said weighing means can weigh the feed that falls into the discharge unit 18, for example. This has the advantage that the discharge unit 18 can receive feed components in a desired composition thereof before the mixing bin 26 is present. Alternatively, the weighing means can determine the amount of feed in the mixing bin 26. According to another possibility, the weighing means can weigh both the feed in the discharge unit 18 and the feed in the mixing bin 26. To that end weighing sensors may be provided in the supporting structure of the conveyor belt 24 and in the suspension of the mixing bin 26 from the rail 27. Since the cutting unit 17 cuts feed from a bale 3 according to the cut surface 23 as described above, the cutting process can be stopped at the exact moment that a desired amount of separated feed is obtained. The remaining part of the bale 3 remains stable, so that no chunks of feed will undesirably fall into the discharge unit 18.

Once a sufficient amount of feed has been cut from a bale of feed on a specific conveyor alley 2, the cutting unit 17 moves upwards to the position of rest that is shown in Fig. 4. Subsequently the conveyor chains 5 are moved some distance from the discharge side 12 towards the inlet side, so that the conveyor alley 2 will be entirely clear at the discharge side. The cutting unit 17 and the discharge unit 18 can then be moved to a next conveyor alley 2 for a different type of feed.

The apparatus as described herein may comprise a suitable control unit by means of which the feeding process can be controlled fully automatically.

As will be apparent from Fig. 4 and 5, the discharge conveyor belt 24 comprises a portion 30 that extends under the discharge side 12 of the conveyor alleys 2. Furthermore, the discharge unit 18 comprises sideboards 31. The spacing between the sideboards 31 and the width of the discharge conveyor belts 24 are at least equal to the spacing between the boards 4 that bound the widest conveyor alley 2. This construction, which is closed in transverse direction, of the discharge unit 18 and the portion 30 of the discharge conveyor belt 24 that extends under the discharge sides 12 of the conveyor alleys 2 ensures that all the feed from each conveyor alley 2 will be received in the discharge unit 18 and be delivered to the mixing bin 26.

As Fig. 5 shows, a transverse slot 32 is provided in the bottom 9 at the location of the return sprocket 7, into which slot the cutting knife 22 of the cutting unit 17 may extend, which ensures that the cutting unit 17 will correctly separate the slice of feed from the bale 3 that is present at the discharge side 12.

One of the boards 4 that bound each conveyor alley 2 at the discharge side 12 may be movable in a direction transverse to the conveying direction, for example be pivotable about a vertical axis, in which case a driving element, e.g. a cylinder-piston assembly, may push the movable board 4 against the bale that is present at the discharge side 12. This causes the bale to be clamped between the two boards 4, so that the bale 3 is held while being cut by the cutting unit 17. This helps to obtain a correct cutting result and prevents the bale from being pulled apart and chunks of feed unintentionally falling into the discharge unit 18.

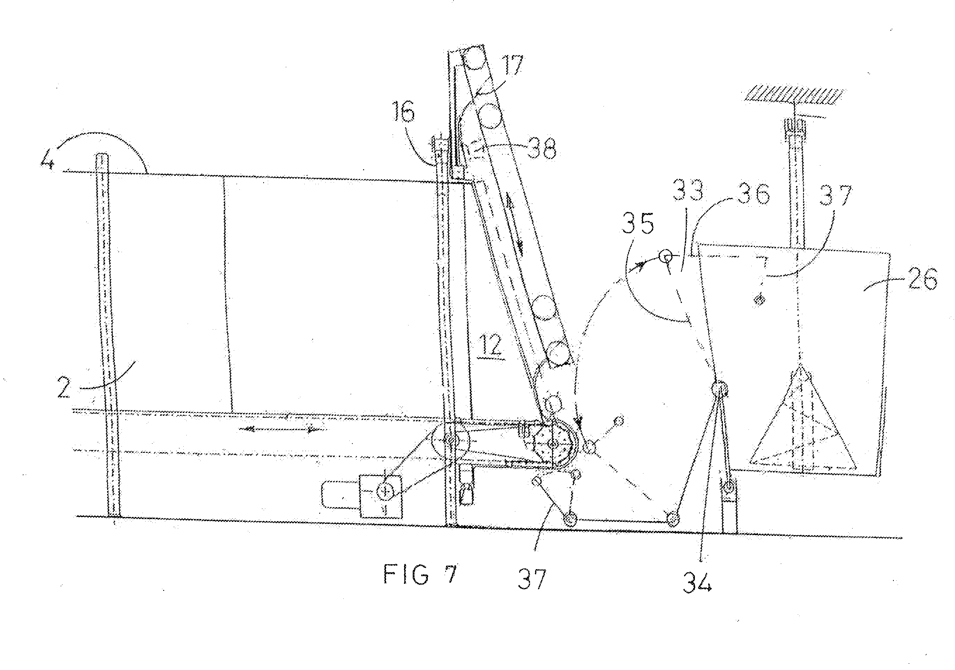

Fig. 7 shows an alternative embodiment of the apparatus according to the invention, in which the cutting unit 17 does not comprise a discharge unit 18. In this embodiment the mixing bin 26 comprises a loading bucket 33 (schematically indicated). Said loading bucket 33 is pivotally connected to the mixing bin 26 at 34 and comprises three pivotally interconnected parts 35, 36 and 37, which parts can be moved from the position that is illustrated in a broken line in figure 7 to the loading position that is illustrated in a full line for loading the mixing bin 26. In the loading position as shown, the loading bucket part 37 is positioned under the discharge side 12 of the conveyor alley 2 opposite which the mixing bin 26 is positioned. The loading bucket parts 34-36 are provided with side walls that can slide over each other.

According to another embodiment of the invention, a non-movable discharge unit may be used with the cutting unit 17 that is shown in Fig. 7, which discharge unit comprises a first conveyor belt extending transversely to the conveyor alleys 2, partially under the discharge sides 12 thereof, which conveyor belt supplies the separated feed to a second conveyor belt. Said second conveyor belt slopes upwards and is capable of depositing the feed in the mixing bin 26. In this embodiment the weighing means comprise sensors accommodated in the supporting structure of the conveyor belt(s).

It is noted that the cutting unit 17 is provided with discharge means for discharging the separated slice of feed from the cutting unit. In figures 4 and 7 a roller 38 is shown as an example of said discharge means, which roller is rotatably mounted - drivably, if desired - in the cutting unit 17. For a further explanation of possible embodiments of such discharge means reference is made to Applicant's Dutch patent application No. 1028732.

According to the invention it is also possible to place the conveyor alleys 2 in an inclined position, at least the part thereof that is located at the discharge side, so that the discharge side 12 will be positioned higher than the inlet side 11. In that case the cutting unit 17 can follow a cutting path substantially perpendicular to the bottom of the conveyor alley, for example, so that the end side of the remaining part of the bale 3 that faces towards the discharge side 12 is rearwardly inclined with respect to the vertical. In this way material of the bale is prevented from unintentionally falling into the discharge unit 18 or the mixing bin 26, and the remaining part of the bale will remain in a stable position on the bottom of the conveyor alley 2. Also in this case the cutting path may be curved, and the cutting path may also extend at an angle to the bottom of the conveyor.

The invention is not restricted to the embodiments as described above, which can be varied in several ways within the scope of the claims.

## Claims

1. An apparatus for separating and mixing feed for livestock, comprising at least one unit for processing feed, which unit comprises a conveyor alley for receiving one or more bales of feed, which conveyor alley comprises conveying means for conveying the received bale(s) of feed from an inlet side to a discharge side, and separating means for separating feed from a bale that has been conveyed to the discharge side, said apparatus furthermore comprising a mixing bin for mixing feed components into a feed mixture and means for supplying separated feed to the mixing bin, wherein the separating element is configured as a cutting unit arranged for separating a slice of feed from the end facing towards the discharge side of the bale that is present at the discharge **characterized in that** the cutting unit is movable in the longitudinal direction of the conveyor alley.

2. An apparatus according to claim 1, wherein the cutting unit is arranged for following a cutting path such that the end side facing towards the discharge side of the remaining part of the bale is rearwardly inclined with respect to the vertical.

3. An apparatus according to claim 1 or 2, wherein the cutting unit is arranged for separating a slice of feed according to a cutting path such that the remaining part of the bale is narrower at the upper side than at the bottom side.

4. An apparatus according to claim 1, 2 or 3, comprising two or more units for processing feed, wherein the conveyor alleys of the various units are arranged side by side, and wherein the cutting unit is movable transversely to the conveyor alleys to operating positions that are in line with the respective conveyor alleys.

5. An apparatus according to any one of the preceding claims, wherein the cutting unit is provided with discharge means for discharging separated feed from the cutting unit.

6. An apparatus according to any one of the preceding claims, wherein the cutting unit comprises a frame along which the cutting unit can move up and down according to the inclined cutting line.

7. An apparatus according to any one of the preceding claims, wherein the cutting unit forms part of a discharge unit and wherein a transverse guide is provided at the discharge side of all the conveyor alleys, from which the discharge unit is suspended in such a manner as to be movable transversely to the conveyor alleys.

8. An apparatus according to claim 8, wherein the mixing bin is provided, with a driving element and the mixing bin can be coupled to the discharge unit for moving the discharge unit with respect to the conveyor alleys.

9. An apparatus according to any one of the preceding claims, wherein the means for supplying separated feed to the mixing bin comprise a conveying element for conveying feed to the mixing bin, said conveying element comprising a portion that extends under the discharge side(s) of the conveyor(s).

10. An apparatus according to claim 7 or 8 and claim 9, wherein the conveying element forms part of the discharge unit.

11. An apparatus according to claim 9 or 10, wherein the conveying element and/or the mixing bin is (are) provided with weighing means for weighing the amount of feed in the discharge unit and/or the mixing bin.

12. An apparatus according to claim 7, wherein the mixing bin is provided with a loading bucket for receiving feed and supplying said feed to the mixing bin.

13. An apparatus according to any one of the preceding claims, wherein the/each conveyor alley comprises a bottom, at least one endless conveyor chain, which is guided in a trough formed in the bottom between return sprockets disposed at the inlet side and at the discharge side, respectively, wherein carriers extending transversely to the conveying direction are connected to the conveyor chain(s), which carriers are guided on the bottom.

14. An apparatus according to claim 13, wherein a transverse slot is formed in the bottom of the conveyor, near the discharge side, into which slot the knife of the cutting unit can extend.

15. An apparatus according to any one of the claims 7-14, wherein the conveyor alleys are bounded by boards on either side, and wherein the discharge unit is provided with sideboards, the spacing between the sideboards being at least equal to the spacing between the boards of the widest conveyor.

16. An apparatus according to claim 15, wherein a board that is movable transversely to the conveying direction for clamping a bale of feed between the boards that bound the conveyor alley in question is provided at the discharge side of one or more conveyor alleys.

17. An apparatus according to any one of the preceding claims, wherein the feeding direction at the inlet side of the/each conveyor alley extends transversely to the conveying direction.

18. An apparatus according to any one of the claims 1-16, wherein the feeding direction at the inlet side of the/each conveyor alley corresponds to the conveying direction.

19. An apparatus according to any one of the preceding claims, wherein at least a part of the/each conveyor alley is inclined, with the discharge side being positioned higher than the inlet side.

20. An apparatus according to any one of the preceding claims, wherein the cutting unit comprises a cutting knife comprising two reciprocable blades.

21. A method for separating and mixing feed for livestock, wherein one or more bales of feed is (are) placed on one or more conveyor alleys, the bale(s) placed on the conveyor alley(s) are conveyed from an inlet side to a discharge side, and feed is separated from a bale that has been conveyed to the discharge side, which separated feed is mixed into a feed mixture in a mixing bin, wherein a slice of feed is separated from the end facing towards the discharge side of the bale that is present at the discharge side **characterized in that** a cutting unit is used which is movable in he longitudinal direction of the conveyor alleys.

22. A method according to claim 21, wherein a slice of feed is separated according to a cutting path such that the remaining part of the bale facing towards the discharge side is rearwardly inclined with respect to the vertical.

23. A method according to claim 21 or 22, wherein a slice of feed is separated according to a cutting path such that the remaining part of the bale facing towards the discharge side is narrower at the upper side than at the bottom side.

24. A method according to claim 21, 22, or 23, wherein the part of the bale that remains after the slice of feed has been separated therefrom is moved from the discharge side towards the inlet side.
